# EUROPÄISCHE PATENTSCHRIFT

(11) **EP 3 559 612 B1**
(45) Veröffentlichungstag und Bekanntmachung des Hinweises auf die Patenterteilung: **23.09.2020**
(21) Anmeldenummer: 17801462.7
(22) Anmeldetag: 22.11.2017
(51) Int. Cl.: G01F 15/14, G01F 1/58, G01F 1/32, G01F 1/68, G01F 1/84

(54) **GEHÄUSE FÜR EIN DURCHFLUSSMESSGERÄT, UND EIN DURCHFLUSSMESSGERÄT MIT EINEM SOLCHEN GEHÄUSE**
HOUSING FOR A FLOW MEASURING DEVICE, AND A FLOW MEASURING DEVICE HAVING SUCH A HOUSING
BOÎTIER POUR UN DÉBITMÈTRE ET DÉBITMÈTRE DOTÉ D'UN TEL BOÎTIER

(30) Priorität: 20.12.2016 DE 102016124975
(43) Veröffentlichungstag der Anmeldung: 30.10.2019
(73) Patentinhaber: Endress+Hauser Flowtec AG, 4153 Reinach (CH)
(72) Erfinder: VOIGT, Frank, 79576 Weil am Rhein (DE); ZIEGLER, Steffen, 79650 Schopfheim (DE); HUBER, Roland, 4058 Basel (CH)
(74) Vertreter: Andres, Angelika Maria
(86) Internationale Anmeldenummer: PCT/EP2017/080054
(87) Internationale Veröffentlichungsnummer: WO 2018/114188

(56) Entgegenhaltungen:
- EP-A1- 2 713 145
- DE-A1- 3 545 155
- DE-A1-102006 020 265
- US-A- 4 881 413

## Beschreibung

Die Erfindung betrifft ein Gehäuse für ein Durchflussmessgerät zur Messung des Massedurchflusses oder Volumendurchflusses eines Mediums in einem Messrohr. Des Weiteren betrifft die Erfindung ein Durchflussmessgerät mit einem solchen Gehäuse.

Gehäuse von Durchflussmessgeräten weisen eine Wandung auf, welche eine Gehäusekammer umfasst, wobei in der Gehäusekammer elektronische Komponenten des Durchflussmessgeräts untergebracht sind, um sie von schädlichen Einflüssen zu schützen. Die Fertigung von solchen Gehäusen kann je nach Ausgestaltung mehrere Fertigungsschritte umfassen und daher sehr aufwändig sein. Die DE102013102544A1 zeigt ein magnetisch-induktives Durchflussmessgerät, bei welchem ein Gehäuse aus einem Außenrohr und zwei Seitenscheiben gefertigt ist, wobei die Seitenscheiben zum Führen des Messrohrs eingerichtet sind, welches Messrohr durch die Seitenscheiben mittig gelagert ist. Die Fertigung eines Gehäuses eines magnetisch-induktiven Durchflussmessgeräts aus zumindest drei Wandungsbauteilen ist aufwändig, und die mittige Lagerung des Messrohrs vermindert die Stabilität des Messrohrs hinsichtlich des Gehäuses.

Die US4881413A lehrt ein Blutflussmessgerät, bei welchem ein Flusskanal in einen Kasten "tray assembly" gesteckt wird. Die kastenförmige Aufnahme ist auf einem "slide" montiert, welcher "slide" eine Flusskanalaufnahme des Kastens während des Betriebs verschließt.

Die DE102006020265A1, die DE3545155A1 sowie die EP2713145A1 offenbaren jeweils ein Gehäuse für ein Durchflussmessgerät mit zwei Halbschalen, welche bei Fertigung zusammengebaut werden.

Aufgabe der Erfindung ist es daher, ein Gehäuse und ein Durchflussmessgerät mit einem Gehäuse vorzuschlagen, welches die genannten Nachteile vermeidet. Diese Aufgabe wird gelöst durch ein Gehäuse gemäß dem unabhängigen Anspruch 1 sowie durch ein Durchflussmessgerät gemäß dem unabhängigen Anspruch 12.

Ein erfindungsgemäßes Gehäuse für ein Durchflussmessgerät umfasst:
einen Gehäusekörper mit einer Gehäusewandung und einer Gehäusekammer, wobei die Gehäusewandung ein erstes Wandelement und ein zweites Wandelement aufweist, wobei die Gehäusekammer durch das erste Wandelement und das zweite Wandelement gebildet ist,
wobei die Gehäusekammer dazu eingerichtet ist, das Messrohr aufzunehmen, wobei die Gehäusewandung eine erste Öffnung und eine zweite Öffnung aufweist, welche Öffnungen dazu eingerichtet sind, das Messrohr an einem ersten Messrohrende und an einem zweiten Messrohrende zu lagern.
wobei das erste Wandelement einen ersten Flügel und einen zweiten Flügel aufweist, und wobei das zweite Wandelement einen dritten Flügel und einen vierten Flügel aufweist, wobei der erste Flügel und der zweite Flügel sowie der dritte Flügel und der vierte Flügel bündig miteinander abschließen.
wobei der erste Flügel die erste Öffnung aufweist, und wobei der zweite Flügel die zweite Öffnung aufweist.

In einer Ausgestaltung des Gehäuses weist ein aufgeklapptes erstes Wandelement eine erste Achse mit geringstem Trägheitsmoment auf und wobei ein aufgeklapptes zweites Wandelement eine zweite Achse mit geringstem Trägheitsmoment aufweist,
wobei die erste Achse und die zweite Achse senkrecht oder parallel zueinander ausgerichtet sind.

In einer Ausgestaltung des Gehäuses sind das erste Wandelement und das zweite Wandelement aus einem Blech, insbesondere aus einem Metallblech gefertigt.

In einer Ausgestaltung des Gehäuses sind im Bereich der ersten Öffnung und der zweiten Öffnung jeweils mindestens eine Gewindebuchse in die Gehäusewandung eingesetzt,
wobei die Gewindebuchse dazu eingerichtet ist, jeweils einen Prozessanschluss an das erste Messrohrende sowie an das zweite Messrohrende anschließbar zu machen,
wobei die Gewindebuchsen bevorzugt in das erste Wandelement eingesetzt sind.

In einer Ausgestaltung des Gehäuses ist zwischen dem ersten Flügel und dem zweiten Flügel ein Abstandshalter angeordnet, welcher dazu eingerichtet ist, den Abstand zwischen dem ersten Flügel und dem zweiten Flügel zu halten.

In einer Ausgestaltung des Gehäuses weist das Gehäuse einen Steckverbinder auf, welcher dazu eingerichtet ist, eine in das Gehäuse einsetzbare bzw. eingesetzte elektronische Schaltbaugruppe mit einer elektronischen Schaltbaugruppe außerhalb des Gehäuses zu verbinden, wobei der Steckverbinder bevorzugt in das erste Wandelement eingesetzt ist.

In einer Ausgestaltung des Gehäuses weist das Gehäuse eine Vergussöffnung auf, welche dazu eingerichtet ist, ein Einbringen einer Vergussmasse in die Gehäusekammer zu ermöglichen, wobei die Vergussöffnung dicht verschließbar ist, wobei die Vergussöffnung bevorzugt in das erste Wandelement eingesetzt ist.

In einer Ausgestaltung des Gehäuses definieren der erste Flügel und der zweite Flügel eine durch die Flügel verlaufende Ebene, welche Ebene senkrecht zu den Flügeln steht, und wobei der erste Flügel und der zweite Flügel jeweils zwei Einkerbungen aufweisen, welche sich bezüglich der Ebene gegenüberstehen.

In einer Ausgestaltung des Gehäuses weist der dritte Flügel und der vierte Flügel jeweils eine Mulde auf, welche Mulde jeweils zwei mit einer Einkerbung in Kontakt stehende Bereiche des zweiten Wandelements verbindet.

In einer Ausgestaltung des Gehäuses weist das erste Wandelement eine größere Wandstärke auf als das zweite Wandelement.

In einer Ausgestaltung des Gehäuses sind das erste Wandelement und das zweite Wandelement durch Laserschweißen zusammengefügt.

Ein erfindungsgemäßes Durchflussmessgerät zur Messung des Massedurchflusses oder Volumendurchflusses eines Mediums in einem Messrohr umfasst:
ein erfindungsgemäßes Gehäuse;
ein Messrohr zum Führen des Mediums;
ein Sensormodul zum Erfassen einer Messgröße und zum Bereitstellen von messgrößenabhängigen Signalen, wobei das Sensormodul in der Gehäusekammer angeordnet ist;
wobei das Messrohr in der Gehäusekammer angeordnet ist.

In einer Ausgestaltung des Durchflussmessgeräts weist das Gehäuse eine Mess-/Betriebselektronik auf, welche Mess-/Betriebselektronik an einem Abstandshalter angeordnet ist, wobei die Mess-/Betriebselektronik dazu eingerichtet ist, das Sensormodul zu betreiben.

In einer Ausgestaltung des Durchflussmessgeräts ist das Gehäuse zumindest teilweise durch eine Vergussmasse ausgefüllt.

In einer Ausgestaltung des Durchflussmessgeräts ist das Durchflussmessgerät ein magnetisch-induktives Durchflussmessgerät, wobei das Sensormodul ein Magnetsystem zum Erzeugen eines Magnetfelds aufweist, wobei das Magnetfeld senkrecht zu einer Messrohrachse steht, und wobei das Sensormodul zwei Messelektroden zum Abgreifen einer Spannung im Medium aufweist, welche Spannung in guter Näherung proportional zur Stärke des Magnetfeld und zum Durchfluss des Mediums ist.

In einer Ausgestaltung des Durchflussmessgeräts ist das Durchflussmessgerät ein thermisches Massedurchflussmessgerät, ein Coriolis-Durchflussmessgerät oder ein Vortex-Durchflussmessgerät.

Im Folgenden wird die Erfindung anhand von Ausführungsbeispielen beschrieben.

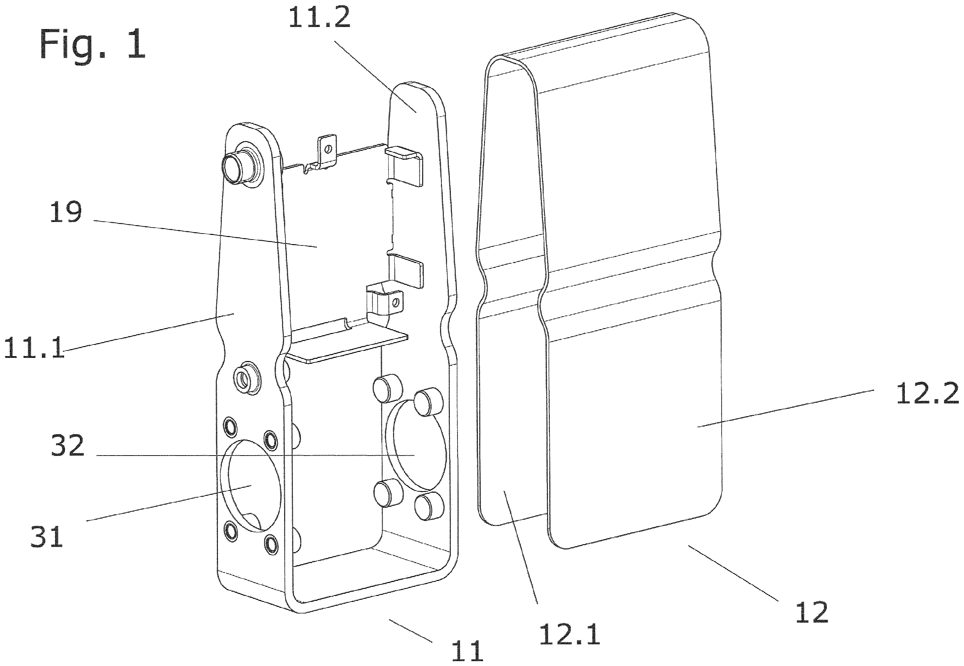

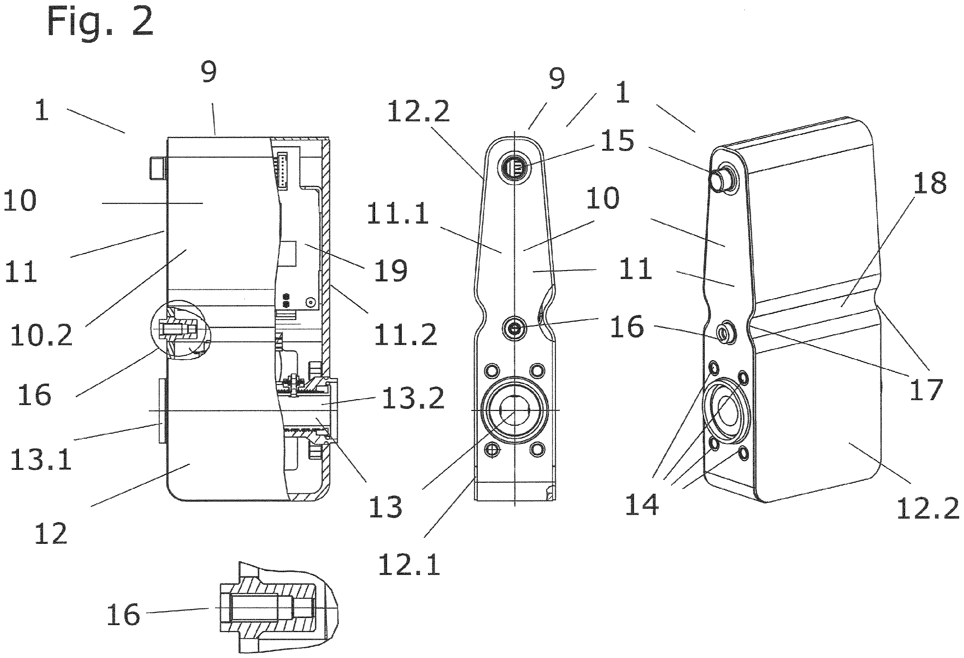

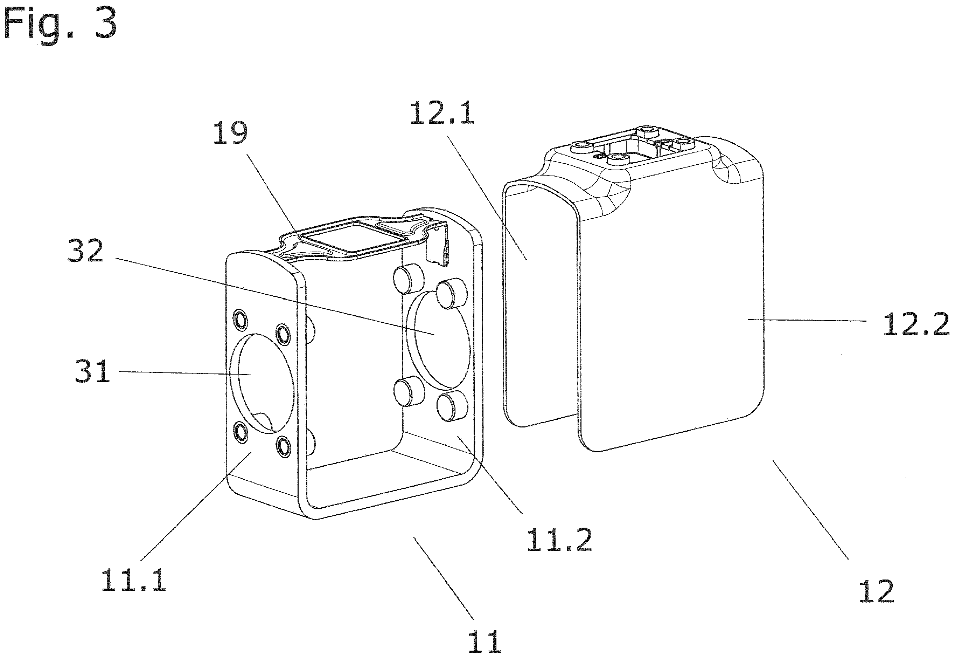

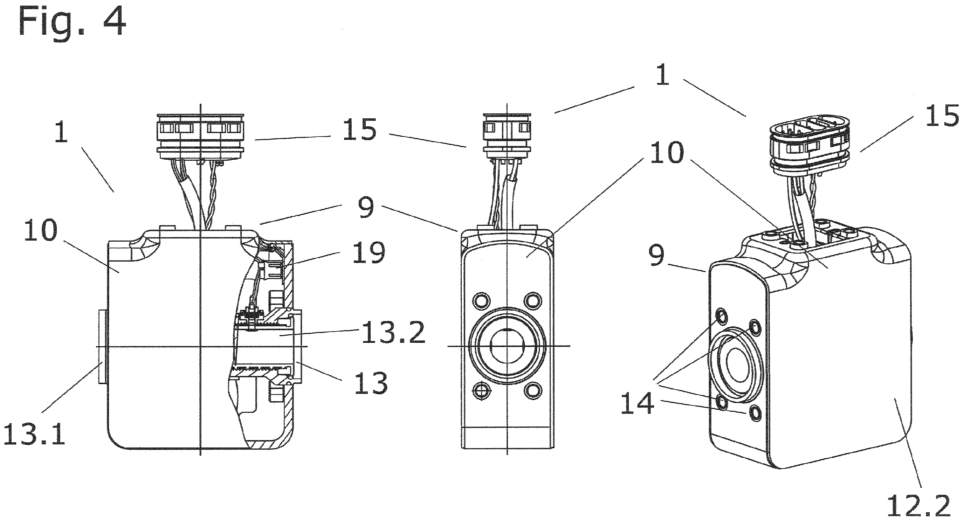

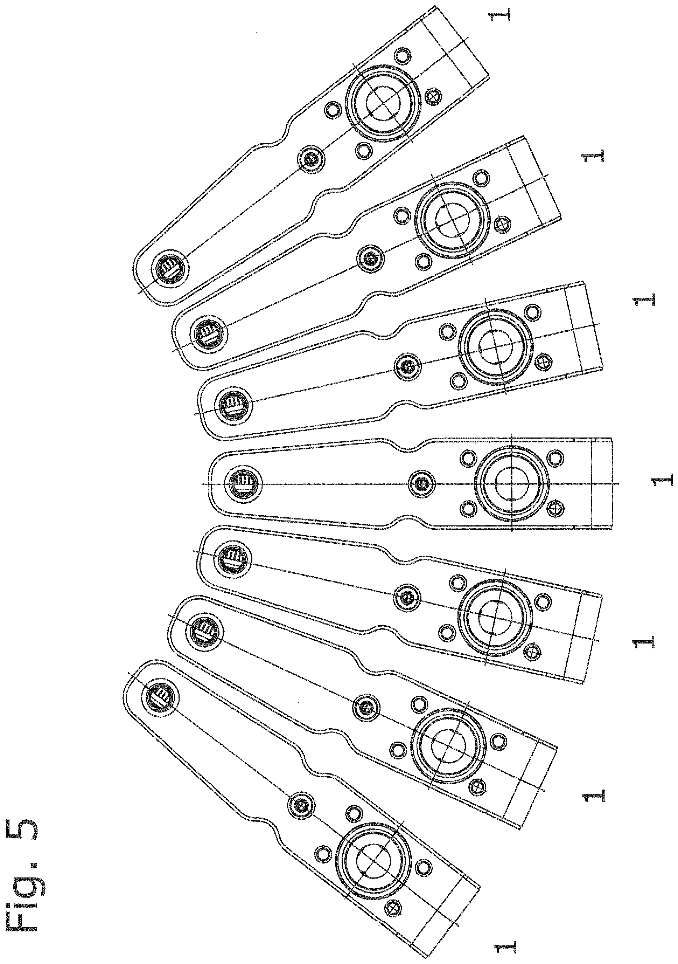

Fig. 1 zeigt eine Ansicht zweier Wandelemente eines erfindungsgemäßen Gehäuses; und Fig. 2 zeigt Ansichten eines Durchflussmessgeräts mit einem erfindungsgemäßen Gehäuse; und Fig. 3 zeigt eine Ansicht zweier Wandelemente eines erfindungsgemäßen Gehäuses; und Fig. 4 zeigt Ansichten eines weiteren Durchflussmessgeräts mit einem weiteren erfindungsgemäßen Gehäuse; und Fig. 5 zeigt eine mögliche Anordnung mehrerer Durchflussmessgeräte 1 mit erfindungsgemäßen Gehäusen beispielsweise in einer Abfüllanlage.

Fig. 1 zeigt ein erstes Wandelement 11 und ein zweites Wandelelement 12, welche Wandelemente zu einem erfindungsgemäßen Gehäuse zusammensetzbar sind, wobei das erste Wandelement 11 einen ersten Flügel 11.1 und einen zweiten Flügel 11.2 aufweist, und wobei das zweite Wandelement 12 einen dritten Flügel 12.1 und einen vierten Flügel 12.2 aufweist. Der erste Flügel weist eine erste Öffnung 31 und der zweite Flügel weist eine zweite Öffnung 32 auf. Der erste Flügel 11.1 und der zweite Flügel 11.2 des ersten Wandelements 11 sind durch einen Abstandshalter 19 fest beabstandet. Durch Zusammenbringen der Wandelemente, so dass die Wandelemente bündig miteinander abschließen, lässt sich ein Gehäuse mit einer Gehäusekammer fertigen, wobei die Gehäusekammer durch die Wandelemente gebildet ist.

Fig. 2 zeigt ein Durchflussmessgerät 1 mit einem erfindungsgemäßen Gehäuse 9 mit Wandelementen gemäß Fig. 1, wobei Fig. 2 eine Seitenansicht mit einem Aufschnitt, eine Frontansicht und eine Schrägansicht des Durchflussmessgeräts 1 zeigt. Das Gehäuse weist eine Gehäusewandung 10 mit einem ersten Wandelement 11 und einem zweiten Wandelement 12 auf. Das erste Wandelement 11 weist einen ersten Flügel 11.1 und einen zweiten Flügel 11.2 auf, das zweite Wandelement 12 weist einen dritten Flügel 12.1 und einen vierten Flügel 12.2 auf, wobei das erste Wandelement 11 und das zweite Wandelement 12 bündig ineinander greifen und eine Gehäusekammer umschließen. Die Gehäusekammer umfasst zwei Bereiche, welche durch zwei gegenüberliegende Mulden 18 im zweiten Wandelement 12 definiert sind. Die Mulden 18 ermöglichen ein sicheres Greifen des Durchflussmessgeräts 1, was eine Beschädigung durch versehentliches Fallenlassen vermeidet. Ein erster Bereich weist dabei ein Messrohr 13 mit einem ersten Messrohrende 13.1 und einem zweiten Messrohrende 13.2 auf, wobei das Messrohr am ersten Messrohrende und am zweiten Messrohrende durch den ersten Flügel 11.1 des ersten Wandelements 11 bzw. durch den zweiten Flügel 11.2 des ersten Wandelements gehalten ist, wobei das erste Messrohrende durch die erste Öffnung 31 im ersten Flügel geführt ist, und wobei das zweite Messrohrende durch die zweite Öffnung 32 im zweiten Flügel geführt ist. Im Bereich der ersten Öffnung sowie im Bereich der zweiten Öffnung sind Gewindebuchsen 14 in das erste Wandelement eingelassen, welche Gewindebuchsen dazu eingerichtet sind, jeweils einen Prozessanschluss an das erste Messrohrende sowie an das zweite Messrohrende anschließbar zu machen.

Das erste Wandelement 11.1 weist im zweiten Bereich einen Steckverbinder 15 auf, welcher in den ersten Flügel eingelassen ist, wobei der Steckverbinder 15 dazu eingerichtet ist, eine im Gehäuse einsetzbare elektronische Schaltbaugruppe mit einer elektronischen Schaltbaugruppe außerhalb des Gehäuses 9 zu verbinden. Bevorzugt ist im ersten Bereich ein Sensormodul zum Erfassen einer Messgröße und zum Bereitstellen von messgrößenabhängigen Signalen angeordnet, wobei das Sensormodul beispielsweise bei einem magnetisch-induktiven Durchflussmessgerät ein Magnetsystem zum Erzeugen eines Magnetfelds in einem das Messrohr 13 durchströmenden Mediums und mindestens ein Paar Messelektroden zum Abgreifen einer im Medium durch das Magnetfeld induzierten durchflussabhängigen Spannung aufweist. Bevorzugt ist im zweiten Bereich eine Mess-/Betriebselektronik zum Betreiben des Sensormoduls vorgesehen, wobei Mess-/Betriebselektronik bevorzugt auf einem Abstandshalter 19 angeordnet ist, welcher Abstandshalter 19 dazu eingerichtet ist, einen Abstand zwischen dem ersten Flügel 11.1 und dem zweiten Flügel 11.2 zu halten. Das erste Wandelement 11.1 weist in einem Bereich von Einkerbungen 17 eine Vergussöffnung 16 auf, welche dazu eingerichtet ist, ein Einbringen einer Vergussmasse in die Gehäusekammer zu ermöglichen, wobei die Vergussöffnung dicht verschließbar ist. Die Vergussmasse dient dazu, die Mess-/Betriebselektronik vom Sensormodul thermisch zu entkoppeln, um einen durchgehenden Betrieb des Durchflussmessgeräts zu ermöglichen.

Fig. 3 zeigt ein erstes Wandelement 11 und ein zweites Wandelelement 12, welche Wandelemente zu einem erfindungsgemäßen Gehäuse zusammensetzbar sind, wobei das erste Wandelement 11 einen ersten Flügel 11.1 und einen zweiten Flügel 11.2 aufweist, und wobei das zweite Wandelement 12 einen dritten Flügel 12.1 und einen vierten Flügel 12.2 aufweist. Der erste Flügel weist eine erste Öffnung 31 und der zweite Flügel weist eine zweite Öffnung 32 auf. Der erste Flügel 11.1 und der zweite Flügel 11.2 des ersten Wandelements 11 sind durch einen Abstandshalter 19 fest beabstandet. Durch Zusammenbringen der Wandelemente, so dass die Wandelemente bündig miteinander abschließen, lässt sich ein Gehäuse mit einer Gehäusekammer fertigen, wobei die Gehäusekammer durch die Wandelemente gebildet ist.

Fig. 4 zeigt ein Durchflussmessgerät 1 mit einem erfindungsgemäßen Gehäuse 9 mit Wandelementen gemäß Fig. 3, wobei Fig. 4 eine Seitenansicht mit einem Aufschnitt, eine Frontansicht und eine Schrägansicht des Durchflussmessgeräts 1 zeigt. Das Gehäuse weist eine Gehäusewandung 10 mit einem ersten Wandelement 11 und einem zweiten Wandelement 12 auf. Das erste Wandelement 11 weist einen ersten Flügel 11.1 und einen zweiten Flügel 11.2 auf, das zweite Wandelement 12 weist einen dritten Flügel 12.1 und einen vierten Flügel 12.2 auf, wobei das erste Wandelement 11 und das zweite Wandelement 12 bündig ineinander greifen und eine Gehäusekammer umschließen. Die Gehäusekammer weist dabei ein Messrohr 13 mit einem ersten Messrohrende 13.1 und einem zweiten Messrohrende 13.2 auf, wobei das Messrohr am ersten Messrohrende und am zweiten Messrohrende durch den ersten Flügel 11.1 des ersten Wandelements 11 bzw. durch den zweiten Flügel 11.2 des ersten Wandelements gehalten ist, wobei das erste Messrohrende durch die erste Öffnung 31 im ersten Flügel geführt ist, und wobei das zweite Messrohrende durch die zweite Öffnung 32 im zweiten Flügel geführt ist. Im Bereich der ersten Öffnung sowie im Bereich der zweiten Öffnung sind Gewindebuchsen 14 in das erste Wandelement eingelassen, welche Gewindebuchsen dazu eingerichtet sind, jeweils einen Prozessanschluss an das erste Messrohrende sowie an das zweite Messrohrende anschließbar zu machen. Das erste Wandelement 11.1 weist einen Steckverbinder 15 auf, welcher in das zweite Wandelement einlassbar ist, wobei der Steckverbinder 15 dazu eingerichtet ist, eine im Gehäuse einsetzbare elektronische Schaltbaugruppe mit einer elektronischen Schaltbaugruppe außerhalb des Gehäuses 9 zu verbinden. Bevorzugt ist in der Gehäusekammer ein Sensormodul zum Erfassen einer Messgröße und zum Bereitstellen von messgrößenabhängigen Signalen angeordnet, wobei das Sensormodul beispielsweise bei einem magnetisch-induktiven Durchflussmessgerät ein Magnetsystem zum Erzeugen eines Magnetfelds in einem das Messrohr 13 durchströmenden Mediums und mindestens ein Paar Messelektroden zum Abgreifen einer im Medium durch das Magnetfeld induzierten durchflussabhängigen Spannung aufweist. Eine Mess-/Betriebselektronik zum Betreiben des Sensormoduls wird über den Steckverbinder 15 an das Sensormodul angeschlossen.

Bei den in den Figuren 1 bis 4 gezeigten Wandelementen von Durchflussmessgeräten 1 sind das erste Wandelement 11 und das zweite Wandelement 12 aus einem Blech, insbesondere aus einem Metallblech gefertigt, wobei das erste Wandelement 11 eine größere Wandstärke aufweist als das zweite Wandelement. Die Wandstärke des zweiten Wandelements ist dabei kleiner als 5 mm und bevorzugt kleiner als 3 mm. Die Wandstärke des zweiten Wandelements ist größer als 1 mm. Die Wandstärke des ersten Wandelements ist dabei kleiner als 8 mm und bevorzugt kleiner als 5 mm. Die Wandstärke des ersten Wandelements ist größer als 2 mm und insbesondere größer als 3mm. Bevorzugt wird das zweite Wandelement während der Fertigung über das erste Wandelement geschoben und nach Herstellen eines bündigen Kontakts gegen das erste Wandelement gepresst, so dass die Wandelemente durch ein Laserschweißverfahren materialschlüssig miteinander verbunden werden können.

Fig. 5 zeigt mehrere Durchflussmessgeräte 1 gemäß Fig. 2, welche Durchflussmessgeräte einen Abschnitt eines Abfüllkarussells einer Abfüllanlage bilden. Das bereichsweise keilförmige Profil der Durchflussmessgeräte ermöglicht ein enges Nebeneinandersetzen der Durchflussmessgeräte 1, so dass ein vollständiges Abfüllkarussell aufgrund der vorteilhaften Keilform der Durchflussmessgeräte mehr Durchflussmessgeräte aufnehmen kann, als ein Abfüllkarussell mit Durchflussmessgeräten ohne bereichsweise keilförmigem Profil.

### Bezugszeichenliste

- 1: Durchflussmessgerät
- 9: Gehäuse
- 10: Gehäusewandung
- 11: erstes Wandelement
- 11.1: erster Flügel
- 11.2: zweiter Flügel
- 12: zweites Wandelement
- 12.1: dritter Flügel
- 12.2: vierter Flügel
- 13: Messrohr
- 13.1: erstes Messrohrende
- 13.2: zweites Messrohrende
- 14: Gewindebuchsen
- 15: Steckverbinder
- 16: Vergussöffnung
- 17: Einkerbung
- 18: Mulde
- 19: Abstandshalter
- 31: erste Öffnung
- 32: zweite Öffnung

## Patentansprüche

1. Gehäuse (9) für ein Durchflussmessgerät (1) zur Messung des Massedurchflusses oder Volumendurchflusses eines Mediums in einem Messrohr (13) umfassend:
einen Gehäusekörper mit einer Gehäusewandung (10) und einer Gehäusekammer;
wobei die Gehäusewandung (10) ein erstes Wandelement (11) und ein zweites Wandelement (12) aufweist, wobei die Gehäusekammer durch das erste Wandelement und das zweite Wandelement gebildet ist,
wobei die Gehäusekammer dazu eingerichtet ist, das Messrohr aufzunehmen, wobei die Gehäusewandung (10) eine erste Öffnung und eine zweite Öffnung aufweist, welche Öffnungen dazu eingerichtet sind, das Messrohr (13) an einem ersten Messrohrende (13.1) und an einem zweiten Messrohrende (13.2) zu lagern.
wobei das erste Wandelement (11) einen ersten Flügel (11.1) und einen zweiten Flügel (11.2) aufweist, und wobei das zweite Wandelement (12) einen dritten Flügel (12.1) und einen vierten Flügel (12.2) aufweist,
wobei der erste Flügel die erste Öffnung (31) aufweist, und wobei der zweite Flügel die zweite Öffnung (32) aufweist,
**dadurch gekennzeichnet, dass**
das erste Wandelement (11) und das zweite Wandelement (12) jeweils aus einem Blech gefertigt sind und bündig ineinandergreifen, wobei der erste Flügel und der zweite Flügel sowie der dritte Flügel und der vierte Flügel bündig miteinander abschließen,

2. Gehäuse (9) nach Anspruch 1,
wobei ein aufgeklapptes erstes Wandelement (11) eine erste Achse mit geringstem Trägheitsmoment aufweist und wobei ein aufgeklapptes zweites Wandelement (12) eine zweite Achse mit geringstem Trägheitsmoment aufweist,
wobei die erste Achse und die zweite Achse senkrecht oder parallel zueinander ausgerichtet sind.

3. Gehäuse (9) nach Anspruch 1 oder 2,
wobei das erste Wandelement (11) und das zweite Wandelement (12) aus einem Metallblech gefertigt sind.

4. Gehäuse (9) nach einem der vorigen Ansprüche,
wobei im Bereich der ersten Öffnung und der zweiten Öffnung jeweils mindestens eine Gewindebuchse (14) in die Gehäusewandung (10) eingesetzt sind,
wobei die Gewindebuchse (14) dazu eingerichtet sind, jeweils einen Prozessanschluss an das erste Messrohrende sowie an das zweite Messrohrende anschließbar zu machen,
wobei die Gewindebuchse bevorzugt in das erste Wandelement eingesetzt sind.

5. Gehäuse (9) nach einem der vorigen Ansprüche,
wobei zwischen dem ersten Flügel und dem zweiten Flügel ein Abstandshalter (19) angeordnet ist, welcher dazu eingerichtet ist, den Abstand zwischen dem ersten Flügel (11.1) und dem zweiten Flügel (11.2) zu halten.

6. Gehäuse (9) nach einem der vorigen Ansprüche,
wobei das Gehäuse einen Steckverbinder (15) aufweist, welcher dazu eingerichtet ist, eine im Gehäuse (9) einsetzbare elektronische Schaltbaugruppe mit einer elektronische Schaltbaugruppe außerhalb des Gehäuses zu verbinden, wobei der Steckverbinder (15) bevorzugt in das erste Wandelement (11) eingesetzt ist.

7. Gehäuse (9) nach einem der vorigen Ansprüche,
wobei das Gehäuse eine Vergussöffnung (16) aufweist, welche dazu eingerichtet ist, ein Einbringen einer Vergussmasse in die Gehäusekammer zu ermöglichen, wobei die Vergussöffnung dicht verschließbar ist, wobei die Vergussöffnung (16) bevorzugt in das erste Wandelement eingesetzt ist.

8. Gehäuse (9) nach einem der vorigen Ansprüche,
wobei der erste Flügel (11.1) und der zweite Flügel (11.2) eine durch die Flügel verlaufende Ebene definieren, welche senkrecht zu den Flügeln steht, und wobei der erste Flügel und der zweite Flügel jeweils zwei Einkerbungen (17) aufweisen, welche sich bezüglich der Ebene gegenüberstehen.

9. Gehäuse (9) nach Anspruch 8,
wobei der dritte Flügel (12.1) und der vierte Flügel (12.2) jeweils eine Mulde (18) aufweisen, welche Mulde (18) jeweils zwei mit einer Einkerbung (17) in Kontakt stehende Bereiche des zweiten Wandelements (12) verbindet.

10. Gehäuse (9) nach einem der vorigen Ansprüche,
wobei das erste Wandelement (11) eine größere Wandstärke aufweist als das zweite Wandelement (12).

11. Gehäuse (9) nach einem der vorigen Ansprüche,
wobei das erste Wandelement und das zweite Wandelement durch Laserschweißen zusammengefügt sind.

12. Durchflussmessgerät zur Messung des Massedurchflusses oder Volumendurchflusses eines Mediums in einem Messrohr umfassend:
ein Gehäuse (9) nach einem der vorigen Ansprüche;
ein Messrohr (13) zum Führen des Mediums;
ein Sensormodul zum Erfassen einer Messgröße und zum Bereitstellen von messgrößenabhängigen Signalen, wobei das Sensormodul in der Gehäusekammer angeordnet ist;
wobei das Messrohr in der Gehäusekammer angeordnet ist.

13. Durchflussmessgerät nach Anspruch 12,
wobei das Gehäuse (9) eine Mess-/Betriebselektronik aufweist, welche Mess-/Betriebselektronik an einem Abstandshalter (19) angeordnet ist, wobei die Mess-/Betriebselektronik dazu eingerichtet ist, das Sensormodul zu betreiben.

14. Durchflussmessgerät nach einem der Ansprüche 12 oder 13,
wobei das Gehäuse (9) zumindest teilweise durch eine Vergussmasse ausgefüllt ist.

15. Durchflussmessgerät nach einem der Ansprüche 12 bis 14,
wobei das Durchflussmessgerät ein magnetisch-induktives Durchflussmessgerät ist, wobei das Sensormodul ein Magnetsystem zum Erzeugen eines Magnetfelds aufweist, wobei das Magnetfeld senkrecht zu einer Messrohrachse steht, und wobei das Sensormodul zwei Messelektroden zum Abgreifen einer Spannung im Medium aufweist, welche Spannung in guter Näherung proportional zur Stärke des Magnetfelds und zum Durchfluss des Mediums ist.

## Claims

1. Housing (9) for a flowmeter (1) designed to measure the mass flow or volume flow of a medium in a measuring tube (13), comprising:
a housing body with a housing wall (10) and a housing chamber;
wherein the housing wall (10) has a first wall element (11) and a second wall element (12), the housing chamber being formed by the first wall element and the second wall element,
wherein the housing chamber is designed to receive the measuring tube, wherein the housing wall (10) has a first opening and a second opening, said openings being provided to support the measuring tube (13) at a first end of the measuring tube (13.1) and at a second end of the measuring tube (13.2),
wherein the first wall element (11) has a first wing (11.1) and a second wing (11.2), and wherein the second wall element (12) has a third wing (12.1) and a fourth wing (12.2),
wherein the first wing features the first opening (31) and the second wing features the second opening (32),
**characterized in that**
the first wall element (11) and the second wall element (12) are each made from a metal sheet and mesh together in a flush manner, wherein the first wing and the second wing, as well as the third wing and the fourth wing, sit flush with one another.

2. Housing (9) as claimed in Claim 1,
wherein a folded-out first wall element (11) has a first axis with a minimum moment of inertia, and wherein a second folded-out wall element (12) has a second axis with a minimum moment of inertia,
wherein the first axis and the second axis are aligned in a manner in which they are perpendicular or parallel to one another.

3. Housing (9) as claimed in Claim 1 or 2,
wherein the first wall element (11) and the second wall element (12) are made from a metal sheet.

4. Housing (9) as claimed in one of the previous claims,
wherein, in the area of the first opening and the second opening, at least one threaded bushing (14) is inserted into the housing wall (10),
wherein the threaded bushing (14) is designed to make it possible, in each case, to connect a process connection to the first end of the measuring tube and to the second end of the measuring tube,
wherein the threaded bushing is preferably inserted into the first wall element.

5. Housing (9) as claimed in one of the previous claims,
wherein a spacer (19) is arranged between the first wing and the second wing, said spacer being designed to maintain the distance between the first wing (11.1) and the second wing (11.2).

6. Housing (9) as claimed in one of the previous claims,
wherein the housing has a plug-in connector (15), said plug-in connector being designed to connect an electronic switch assembly - which can be inserted into the housing (9) - to an electronic switch assembly situated outside the housing, wherein the plug-in connector (15) is preferably inserted into the first wall element (11).

7. Housing (9) as claimed in one of the previous claims,
wherein the housing has a potted opening (16), which is designed to permit the introduction of a potted compound into the housing chamber, wherein the potted opening can be sealed tight, wherein the potted opening (16) is preferably implemented in the first wall element.

8. Housing (9) as claimed in one of the previous claims,
wherein the first wing (11.1) and the second wing (11.2) define a plane extending through the wings, said plane being perpendicular to the wings, and wherein the first wing and the second wing each have two indentations (17), wherein said indentations are opposite one another in relation to the plane.

9. Housing (9) as claimed in Claim 8,
wherein the third wing (12.1) and the fourth wing (12.2) each have a hollow (18), wherein said hollow (18) connects two zones of the second wall element (12) that are in contact with a hollow (17).

10. Housing (9) as claimed in one of the previous claims,
wherein the first wall element (11) has a wall thickness that is greater than the second wall element (12).

11. Housing (9) as claimed in one of the previous claims,
wherein the first wall element and the second wall element are assembled via laser welding.

12. Flowmeter designed to measure the mass flow or the volume flow of a medium in a measuring tube, comprising:
a housing (9) as claimed in one of the previous claims;
a measuring tube (13) designed to guide the medium;
a sensor module designed to measure a measured variable and to provide signals that depend on the measured variable, wherein the sensor module is arranged in the housing chamber;
wherein the measuring tube is arranged in the housing chamber.

13. Flowmeter as claimed in Claim 12,
wherein the housing (9) has a measuring/operating electronics unit, said measuring/operating electronics unit being arranged on a spacer (19), wherein the measuring/operating electronics unit is designed to operate the sensor module.

14. Flowmeter as claimed in one of the Claims 12 or 13,
wherein the housing (9) is at least partially filled by a potted compound.

15. Flowmeter as claimed in one of the Claims 12 to 14,
wherein the flowmeter is an electromagnetic flowmeter, wherein the sensor module features a magnet system designed to generate a magnetic field, wherein the magnetic field is perpendicular to the measuring tube axis, and wherein the sensor module has two electrodes to measure a voltage in the medium, wherein said voltage is, with a good approximation, proportional to the strength of the magnetic field and the flow of the medium.

## Revendications

1. Boîtier (9) pour un débitmètre (1) destiné à la mesure du débit massique ou du débit volumique d'un produit dans un tube de mesure (13), comprenant :
un corps de boîtier avec une paroi de boîtier (10) et une chambre de boîtier ;
la paroi de boîtier (10) présentant un premier élément de paroi (11) et un deuxième élément de paroi (12), la chambre de boîtier étant formée par le premier élément de paroi et le deuxième élément de paroi,
la chambre de boîtier étant conçue pour recevoir le tube de mesure, la paroi de boîtier (10) présentant une première ouverture et une deuxième ouverture, lesquelles ouvertures sont prévues pour supporter le tube de mesure (13) en une première extrémité de tube de mesure (13.1) et en une deuxième extrémité de tube de mesure (13.2),
le premier élément de paroi (11) présentant une première aile (11.1) et une deuxième aile (11.2), et le deuxième élément de paroi (12) présentant une troisième aile (12.1) et une quatrième aile (12.2),
la première aile présentant la première ouverture (31) et la deuxième aile présentant la deuxième ouverture (32),
**caractérisé**
**en ce que** le premier élément de paroi (11) et le deuxième élément de paroi (12) est chacun constitué d'une tôle et s'imbriquent de manière affleurante, la première aile et la deuxième aile, ainsi que la troisième aile et la quatrième aile, se terminant en affleurement les unes par rapport aux autres.

2. Boîtier (9) selon la revendication 1,
pour lequel un premier élément de paroi (11) déplié présente un premier axe avec un moment d'inertie minimal, et pour lequel un deuxième élément de paroi (12) déplié présente un deuxième axe avec un moment d'inertie minimal,
le premier axe et le deuxième axe étant alignés perpendiculairement ou parallèlement l'un par rapport à l'autre.

3. Boîtier (9) selon la revendication 1 ou 2,
pour lequel le premier élément de paroi (11) et le deuxième élément de paroi (12) sont constitués d'une tôle métallique.

4. Boîtier (9) selon l'une des revendications précédentes,
pour lequel, dans la zone de la première ouverture et de la deuxième ouverture, au moins une douille filetée (14) est insérée dans la paroi de boîtier (10),
la douille filetée (14) étant conçue pour permettre le raccordement d'un raccord process à la première extrémité de tube de mesure ainsi qu'à la deuxième extrémité de tube de mesure,
la douille filetée étant insérée de préférence dans le premier élément de paroi.

5. Boîtier (9) selon l'une des revendications précédentes,
pour lequel est disposé, entre la première aile et la deuxième aile, une entretoise (19), laquelle entretoise est conçue pour maintenir la distance entre la première aile (11.1) et la deuxième aile (11.2).

6. Boîtier (9) selon l'une des revendications précédentes,
pour lequel le boîtier comporte un connecteur (15), lequel connecteur est conçu pour relier un module de commutation électronique - pouvant être inséré dans le boîtier (9) - avec un module de commutation électronique situé à l'extérieur du boîtier, le connecteur (15) étant de préférence inséré dans le premier élément de paroi (11).

7. Boîtier (9) selon l'une des revendications précédentes,
pour lequel le boîtier présente une ouverture de scellement (16), laquelle ouverture est prévue pour permettre l'introduction d'une masse de scellement dans la chambre de boîtier, l'ouverture de scellement pouvant être obturée de façon étanche, l'ouverture de scellement (16) étant réalisée de préférence dans le premier élément de paroi.

8. Boîtier (9) selon l'une des revendications précédentes,
pour lequel la première aile (11.1) et la deuxième aile (11.2) définissent un plan s'étendant à travers les ailes, lequel plan est perpendiculaire aux ailes, et la première aile et la deuxième aile présentant chacune deux encoches (17), lesquelles encoches sont face l'une à l'autre par rapport au plan.

9. Boîtier (9) selon la revendication 8,
pour lequel la troisième aile (12.1) et la quatrième aile (12.2) présentent chacune un creux (18), lequel creux (18) relie deux zones du deuxième élément de paroi (12), qui sont en contact avec une encoche (17).

10. Boîtier (9) selon l'une des revendications précédentes,
pour lequel le premier élément de paroi (11) présente une épaisseur de paroi supérieure à celle du deuxième élément de paroi (12).

11. Boîtier (9) selon l'une des revendications précédentes,
pour lequel le premier élément de paroi et le deuxième élément de paroi sont assemblés par soudage au laser.

12. Débitmètre destiné à la mesure du débit massique ou du débit volumique d'un produit dans un tube de mesure, comprenant :
un boîtier (9) selon l'une des revendications précédentes ;
un tube de mesure (13) destiné à guider le produit ;
un module capteur destiné à la mesure d'une grandeur et à la mise à disposition de signaux dépendant de la grandeur de mesure, le module capteur étant disposé dans la chambre de boîtier ;
le tube de mesure étant disposé dans la chambre de boîtier.

13. Débitmètre selon la revendication 12,
pour lequel le boîtier (9) comprend une électronique de mesure / d'exploitation, laquelle électronique de mesure / d'exploitation est disposée sur une entretoise (19), l'électronique de mesure / d'exploitation étant conçue pour exploiter le module capteur.

14. Débitmètre selon l'une des revendications 12 ou 13,
pour lequel le boîtier (9) est rempli au moins partiellement d'une masse de scellement.

15. Débitmètre selon l'une des revendications 12 à 14,
pour lequel le débitmètre est un débitmètre magnéto-inductif, le module capteur comportant un système magnétique destiné à générer un champ magnétique, le champ magnétique étant perpendiculaire à l'axe de tube de mesure, et le module capteur comportant deux électrodes de mesure destinées au prélèvement d'une tension dans le produit, laquelle tension est, avec une bonne approximation, proportionnelle à l'intensité du champ magnétique et au débit du produit.
